# EUROPEAN PATENT SPECIFICATION

(11) **EP 2 487 207 B1**
(45) Date of publication and mention of the grant of the patent: **22.02.2017**
(21) Application number: 10821655.7
(22) Date of filing: 30.09.2010
(51) Int. Cl.: C08L 95/00, C05F 5/00, C08L 97/02

(54) **ANTI-AGEING ADDITIVE FOR BITUMEN**
HALTBARKEITSVERLÄNGERNDER ZUSATZSTOFF FÜR BITUMEN
ADDITIF ANTIVIEILLISSEMENT POUR BITUME

(30) Priority: 07.10.2009 CL 19432009
(43) Date of publication of application: 15.08.2012
(73) Proprietor: Wortelboer, Johan Petrus, 9465 TN Anderen (NL); Thenoux Zeballos, Guillermo Alfonso, Las Condes, Santiago 7610471 (CL); Leighton Puga, Federico Mariano, Vitacura, Santiago 7630028 (CL)
(72) Inventor: WORTELBOER, Johan Petrus, 9465 TN Anderen (NL)
(74) Representative: Carvajal y Urquijo, Isabel
(86) International application number: PCT/IB2010/054427
(87) International publication number: WO 2011/042843

(56) References cited:
- EP-A1- 1 645 595
- WO-A1-2004/094584
- ES-A1- 2 265 714
- GB-A- 1 047 475
- JP-A- S59 193 817
- US-A- 3 379 662
- US-A1- 2006 277 887
- US-A1- 2007 231 545
- US-A1- 2008 032 015
- Eldina Castro Sousa ET AL: "Chemical composition and bioactive compounds of grape pomace (Vitis vinifera L.), Benitaka variety, grown in the semiarid region of Northeast Brazil", Food Science and Technology (Campinas), 1 March 2014 (2014-03-01), pages 135-142, XP055208553, Retrieved from the Internet: URL:http://www.scielo.br/scielo.php?script =sci_arttext&pid=S0101-20612014000100020
- QIAN DENG ET AL: "Chemical composition of dietary fiber and polyphenols of five different varieties of wine grape pomace skins", FOOD RESEARCH INTERNATIONAL, ELSEVIER APPLIED SCIENCE, BARKING, GB, vol. 44, no. 9, 25 May 2011 (2011-05-25), pages 2712-2720, XP028304130, ISSN: 0963-9969, DOI: 10.1016/J.FOODRES.2011.05.026 [retrieved on 2011-07-05]
- Andrés M. Moure ET AL: "Natural antioxidants from residual sources", Food Chemistry, 1 February 2001 (2001-02-01), pages 145-171, XP055208584, Retrieved from the Internet: URL:http://www.sciencedirect.com/science/a rticle/pii/S0308814600002235/pdfft?md5=b92 07cec8e478bb777f52df21a569756&pid=1-s2.0-S 0308814600002235-main.pdf [retrieved on 2015-08-19]
- "Studies in Ancient Technology ED - Forbes; Robert J", 1 January 1993 (1993-01-01), STUDIES IN ANCIENT TECHNOLOGY (THIRD EDITION), E.J. BRILL, PAGE(S) 1 - 124, XP007922201, ISBN: 90-04-00621-4 * page 26 *

## Description

### FIELD OF APPLICATION

The present invention is related to the bitumen industry. In particular, the present invention consists of an anti-aging additive for bitumen with free radical scavengers derived from grapevines, more specifically from grape marc, a method to prepare said additive, asphalt modified with said additive and a preparation method for said modified asphalt, which has improved properties that decrease asphalt aging.

In the present specification, "bitumen" is defined as the residual fraction resulting from fractionated distillation of petroleum, also known as bituminous binder; and "asphalt" or "asphaltic mixture" is defined as a mixture of bitumen, stones and other additives used in the road industry, for instance, to coat roads with asphaltic road surface. The "other additives" are defined as the mineral matter used together with the bitumen to make asphalt, such as, for instance, sand, clay and stones to get an additive with different granulometries.

### STATE OF THE ART

There are traditional methods to improve the durability of asphaltic road surfaces known in the art, such as:
▪ Maximizing the thickness of the bituminous film through an increase of the bitumen content and a suitable granulometric gradation and aggregate selection.
▪ Compacting the asphaltic mixture in such a way as to reach a maximum void percentage around 8%.
▪ Designing mixtures with dense granulometries of waterproof aggregates.

A recognized way to improve the durability of asphaltic road surfaces is the addition of fines, which causes an increase in bitumen viscosity, which increases the thickness of the film that surrounds the aggregates, thus reducing the bitumen-aging rate.

In the previous art, the patent document EP 1,645,595 issued to Colas is known, which consists of a hydrocarbonated binder to fabricate layers and/or road construction coatings and/or civil engineering, which comprises at least bitumen and an oily fluidizer for bitumen based on natural fatty substances with long fatty hydrocarbon chains, wherein said natural fatty substances were subjected to at least one chemical functionalization reaction that results in the introduction of at least one oxygenated functional group. This oil is used to decrease bitumen viscosity as asphalt binder at low temperatures and as a surface treatment, and though it facilitates the binder flow and also allows decreasing the temperature, it does not tackle the technical problem of bitumen aging.

The main characteristic of the bitumen aging process is an increase in viscosity, which turns it into a material with mechanical properties that are more similar to those of a solid (e.g., Xiaohu L., Ulf Isacsson, (2002), "Effect of Ageing on Bitumen Chemistry and Rheology", Construction and Building Materials, 16, pp 15-22).

This phenomenon is known as "hardening by aging". There are two types of aging: chemical and physical. The chemical aging has an irreversible character. Many factors affect the chemical aging process, among which the main are: hardening, lack of volatile components, and exudation, being hardening the most important of these. On the other hand, the physical process is a molecule rearrangement to reach an optimal thermodynamic state under a specific set of conditions. This process is reversible.

The bitumen hardening process occurs with higher severity during mixing and settling in place (Xiaohu L., Ulf Isacsson, (2002), "Effect of Ageing on Bitumen Chemistry and Rheology", Construction and Building Materials, 16, pp 15-22).

During the mixing process, the bitumen volume required to produce the asphaltic mixture is stretched to totally cover the surface of the aggregates, and in that way it is exposed to oxygen at high temperatures as a film with thickness ranging from 6 to 8 microns. This first aging process is called short-term aging.

In this stage, the aging process occurs mainly due to the loss of volatile compounds at the high temperatures used in the mixing and compaction processes, and to the higher hardening rate due to the exposition of bitumen to high temperatures between 150 and 200ºC during the mixing process. The aging patterns can vary, depending on the combination of factors present.

Some researchers have observed that the first cause of aging is volatilization and hardening resulting from a dual mechanism by which oxygen combines with highly reactive hydrocarbon compounds.

This process is the base for the formation of aromatic cyclic compounds. Finally, these compounds oxidize slowly, leaving carbonyl groups, such as ketones and carboxylic acids, as the final product.

On the other hand, Xiaolu L. and Ulf I. ((2002), "Effect of Ageing on Bitumen Chemistry and Rheology", Construction and Building Materials, 16, pp 15-22), propose that the combination of high temperature and oxygen addition influences the separation of hydrocarbon chains, and this, added to the high polarity of the system due to the generation of ketones, carboxylic acids and sulfoxides, causes a subsequent polymerization of bitumen molecules. The polar groups formed during the hardening process tend to associate to form more complex molecules with higher molecular weight, which causes an increase in the bitumen viscosity, which hardens it and makes it less flexible. This increase in polarity is finally translated into an increase of the fraction of asphaltenes together with a decrease of aromatic compounds, which are transformed via an associative process; Aromatics → Resins → Asphaltenes.

### TECHNICAL PROBLEM

Hardening by aging is one of the main causes of wear in asphaltic road surfaces, and even is signaled as the main cause of cracking and other wear forms in asphaltic road surfaces. Damage by moisture, for instance, causes a weakening of the bitumen-aggregate forces, wherein this weakening of adhesive forces is strengthened by bitumen aging, since carboxylic acids and sulfoxides form as a product of oxidative damage, which are water-soluble and contribute to the detachment between the bitumen and aggregates.

In the case of bitumen, during the aging process, under conditions including high temperature, oxygen presence and/or UV radiation, active functional groups decompose and form free radicals. These react with oxygen to form hydroperoxides, which are highly unstable oxidant molecules that subsequently decompose to form carbonyl groups. On the other hand, peroxides can act as free radical generators and can react with sulfur compounds to form sulfoxides.

Asphaltic road surfaces, unlike concrete road surfaces, have some degree of flexibility in its first years of life, allowing it to "accommodate" to the resilient deformation experienced by the granular base and sub-base, as well as to the resilient deformation or consolidation experienced by the sub-gradient due to transit loads passing by.

Bitumen starts to lose its viscoelastic characteristics since the first day of service, a process that accelerates during the construction stage and remains at a relatively high-accelerated rhythm during the first 2 to 3 years. In this initial service stage, bitumen will have a viscoelastic behavior that allows it to "accommodate" to resilient deformations experienced by underlying layers of the structure and the foundation grounds.

Once bitumen, and therefore the asphaltic mixture, starts to lose its viscoelastic properties, the asphaltic mixture starts responding more as a rigid material, which will have a lower possibility to dissipate energy by deformation when confronted to transit loads passing by. In other words, the material will start to assume the entire working tensions and will start a fatigue wearing process due to repeated transit loads. Evidently, the structural design, i.e. the design of the thickness of each layer, takes into consideration this phenomenon, and so the design limits the total deformation condition of the structure to prolong the useful life of the asphaltic surface. However, mainly due to economic considerations, no excessive bitumen layer thicknesses can be designed, and therefore the road surfaces will always be subjected to deformations and tensions.

On the other hand, a large amount of asphaltic road surfaces in underdeveloped countries fail due to a combination of bad structural design and asphaltic mixture aging, a situation that is less common in developed countries where bitumen aging is a relevant aspect for the conservations plans during the lifetime of a road surface.

### TECHNICAL SOLUTION

It has been observed that the damage due to formation of peroxide radicals decreases through neutralization of hydroperoxide molecules when free radical scavengers from grape marc are incorporated, which avoids the subsequent chain reaction and decreases the formation of carbonyl and sulfoxide groups. This also decreases the polarity in the system, therefore reducing the formation of new molecular linkages and limiting the increase of asphaltenes, which at the end will contribute to decrease the bitumen viscosity increase and the subsequent changes in physical and rheological properties.

### TECHNICAL ADVANTAGES

The search of additives to reduce the bitumen aging rate, both during the construction process as in its first service years, allows extending the useful life of asphaltic road surfaces as a product of extending the viscoelastic properties for a longer period. Additionally, the technical advantages of the present invention will be the consequence of practical conditions derived from the decrease of the increase in bitumen viscosity and modulus, by which an increment of the useful life of the asphaltic road of 20% or more can be achieved.

### DESCRIPTION OF THE DRAWINGS

Figure 1 shows the decrease in the viscosity increment factor according to the Rolling/Thin Film Oven Test (RTFOT) for bitumen including the additive of the present invention.

Figures 2a and 2b show plots of the infrared spectrum of asphalt sample with and without the additive of the present invention, with no aging in figure 2a and showing RTFOT aging in figure 2b; this shows a chemical proof of the decrease in oxidized species in bituminous samples after RTFOT aging.

Figure 3 shows a comparison of the FRAASS fragility point before and after RTFOT aging in bitumen with different concentrations of the additive of the present invention.

### DETAILED DESCRIPTION OF THE INVENTION

The main objective of the present invention is providing an asphalt with anti-aging properties to prolong the useful life thereof. Said asphalt contains free radical scavengers from an extract prepared from grape marc. Said grape marc is subjected to a special process to prepare a dry powder that keeps the free radical scavenging properties originally found in grapes. Particularly, the grape marc comprises grape skins, seeds, stems and even grape pulp. The proportions of said components vary according to the grape strain being used. Many free radical scavenging compounds are known to be present in grape marc. The present invention also comprises a process to prepare asphalt with anti-aging properties.

According to the invention, an asphalt with anti-aging properties is provided, wherein said bitumen essentially comprises:
a) anti-aging bitumen that comprises from 80 to 98% by weight of bitumen with a penetration index ranging from 20 to 200 mm/10; more preferably ranging from 30 to 200 mm/10; and from 2 to 20% by weight of an anti-aging additive consisting in dehydrated and ground grape marc with a diameter ranging from 10 µm to 10,000 µm, preferably ranging from 20 µm to 1,000 µm, and more preferably ranging from 50 µm to 300 µm, which contains free radical scavengers essentially comprising from 1.5 to 12% by weight of phenols; form 2.5 to 20% by weight of tannins; from 0.5 to 5% by weight of procyanidins; and from 0.0 to 0.8% by weight of anthocyanins; and
b) aggreagates.

The anti-aging additive for bitumen of this invention consists in dehydrated and ground grape marc having a diameter ranging from 10 µm to 10,000 µm, preferably ranging from 20 µm to 1,000 µm, and more preferably ranging from 50 µm to 300 µm, and said ground grape marc comprising:
a) from 2 to 13% by weight of moisture;
b) from 85 to 97% by weight of organic matter;
c) from 7 to 18% by weight of protein;
d) from 3 to 14% by weight of fats;
e) from 10 to 35% by weight of fiber;
f) from 1.5 to 12% by weight of phenols;
g) from 2.5 to 20% by weight of tannins;
h) from 0.5 to 5% by weight of procyanidins; and
i) from 0.0 to 0.8% by weight of anthocyanins.

Generally, said grape marc comes preferably from the red wine industry using varieties such as Carménère, Cabernet Sauvignon, Merlot, Petit Verdot, Sangiovese, Dolcetto, Pinotage, Syrah, etc. However, said marc can come from the white wine industry, as well as from the grape juice industry and other industries that process grapes and generate marc as part of their production process.

The preparation of the additive of the present invention comprises several steps to protect the integrity of the free radical scavenging compounds.

According to another aspect of the present invention, a process to prepare asphalt with anti-aging properties is provided, which essentially comprises:
a) introducing dry and hot aggregates in an industrial-size ceramic grinder for the production of asphalt;
b) adding anti-aging bitumen,; and
c) mixing the ingredients in said grinder for the production of asphalt.

According to another aspect of the present invention, a process to prepare asphalt with anti-aging properties is provided, which essentially comprises:
a) introducing dry and hot aggregates in an industrial-size ceramic grinder for the production of asphalt;
b) adding into said ceramic grinder bitumen with a penetration index ranging from 20 to 200 mm/10, more preferably from 30 to 200 mm/10;
c) adding said anti-aging additive with an oily fluidizer into said ceramic grinder, wherein said anti-aging additive consists in dehydrated and ground grape marc with a diameter ranging from 10 µm to 10,000 µm, preferably ranging from 20 µm to 1,000 µm, and more preferably ranging from 50 µm to 300 µm; and
d) mixing the contents of said ceramic grinder.

### APPLICATION EXAMPLES

### Example 1: Preparation of an anti-aging additive for bitumen from Cabernet Sauvignon (CS) grape marc.

Various 50 kg samples were directly obtained from the press and wine fermentation barrels where Cabernet Sauvignon grapes were processed. The material was vacuum packed in plastic bags with 10 kg each and was frozen at a temperature of -25ºC, in the collection place.

The frozen material was transported to the drying plant, where it was thawed at a temperature of 25ºC for 24 hours until it was possible to shred the product and extend it in layers.

The thawed material was extended on grating racks and homogenous ventilation was applied at a temperature of 40ºC during 8 days. Drying was assessed by measuring moisture by heating to 100ºC, which gave a resulting 4% of moisture.

The dried material was ground in a grain grinder. The ground material was sieved with a 100-µm mesh sieve.

### Example 2: Preparation of anti-aging additive for bitumen from Cabernet Sauvignon (CS) grape marc according to other embodiment of the present invention.

As in Example 1, various 50 kg samples of grape marc were directly obtained from the press and wine fermentation barrels where Cabernet Sauvignon grapes were processed.

The grape marc was dried using a ring dryer to obtain a moisture level of 4%.

The dried grape marc was subsequently ground in a grain grinder. The ground material was sieved with a 100 mm mesh sieve.

### Example 3: Assessment of the free radical scavenging capacity of the prepared modifiers based on Cabernet Sauvignon

The free radical scavenging capacity of the scavengers and the stability of said capacity were measured using several laboratory techniques. In the following Tables 1 to 3, the values obtained for each of the additives prepared in Example 1 are described.

**Table 1: Free radical scavenging capacity of grape marc (ORAC: Oxygen Radical Absorbance Capacity) in micromoles of Trolox equivalents per gram (µmol TE/gr).**

| Original Variety | ORAC (µmol TE/gr) | |
|---|---|---|
| | Mean | Std. Dev. |
| Cabernet Sauvignon, CS | 578.01 | 24.88 |

**Table 2: Data on total procyanidins in grape marc.**

| Original Variety | Total procyanidins (mg/g) |
|---|---|
| Cabernet Sauvignon, CS | 11.5 |

**Table 3: Stability of the radical scavenging capacity in ORAC (µmol TE/gr)**

| Original Variety | Time 0 | 2 days | 6 days | 9 days | 15 days | Decrease % |
|---|---|---|---|---|---|---|
| Cabernet Sauvignon (CS) | 446 | 440 | 455 | 480 | 442 | -1% |

In Table 1, the radical scavenging capacity present in the Cabernet Sauvignon (CS) variety is shown as an ORAC value, Table 2 shows the procyanidin concentration present in the Cabernet Sauvignon variety, and Table 3 shows the good stability of the free radical scavenging capacity of this Cabernet Sauvignon variety.

### Example 4: Preparation of bitumen modified with the additive prepared according to Example 1.

Different bitumen samples were prepared using the additives described in Example 1. Each of the bitumen samples includes a different content percentage of the anti-aging additive of the present invention. The preparation procedure described in the following only varies in the percentage of Cabernet Sauvignon grape marc-based additive added to the bitumen.

Bitumen was heated to a temperature of 85ºC. Subsequently, the additive was added as the powder described in Example 1 and was mixed for 1 hour until a homogeneous product was obtained. The additive was derived from the CS variety and added at different concentrations, ranging from 1% to 20%, thus obtaining bitumen modified with CS grape marc additive (CS additive) at different concentrations. All samples were subjected to aging and strength tests detailed in the following examples.

### Example 5: Assessment of the radical scavenging capacity of the additive of the invention in an asphaltic road surface using the Rolling-Thin Film Oven Test, RTFOT)

Asphaltic samples were subjected to an aging process. To compare the anti-aging effect of the additive of the present invention, a sample with no additive is used as a control sample. Different aging states were assayed: no aging and short-term laboratory aging, according to the RTFOT procedure (ASTM D 2872, 2004).

With the CS additive, an addition of 20% of additive decreases by 33% the increase in viscosity after RTFOT aging. The RTFOT aging represents the aging experienced by bitumen during the asphaltic mixture process and road surface compaction, i.e. corresponds to the zero point in the life cycle of the road surface. In Table 4, the specific results obtained in the viscosity measurement in the original state and after RTFOT aging of the control sample (0% CS additive) and samples modified with different percentages of CS additive. The percentage of reduction in the viscosity increase after RTFOT aging of the modified samples versus the control sample is also shown.

**Table 4: Reduction in the increase factor for the viscosity after RTFOT aging**

| Concentration (% by weight) | Viscosity (cP) at 60ºC | | | |
|---|---|---|---|---|
| Cabernet Sauvignon-based additive | Non-aged road surface | RTFOT | % of viscosity increment | Relative difference with non-aged road surface |
| 0% | 319.128 | 804.210 | 252% | |
| 1% | 347.922 | 875.578 | 252% | 0% |
| 2% | 339.225 | 824.135 | 243% | 4% |
| 4% | 317.981 | 747.353 | 235% | 7% |
| 6% | 339.650 | 768.076 | 226% | 10% |
| 8% | 318.762 | 732.377 | 230% | 9% |
| 12% | 326.893 | 719.693 | 220% | 13% |
| 16% | 308.841 | 669.663 | 217% | 14% |
| 20% | 315.443 | 637.683 | 202% | 20% |

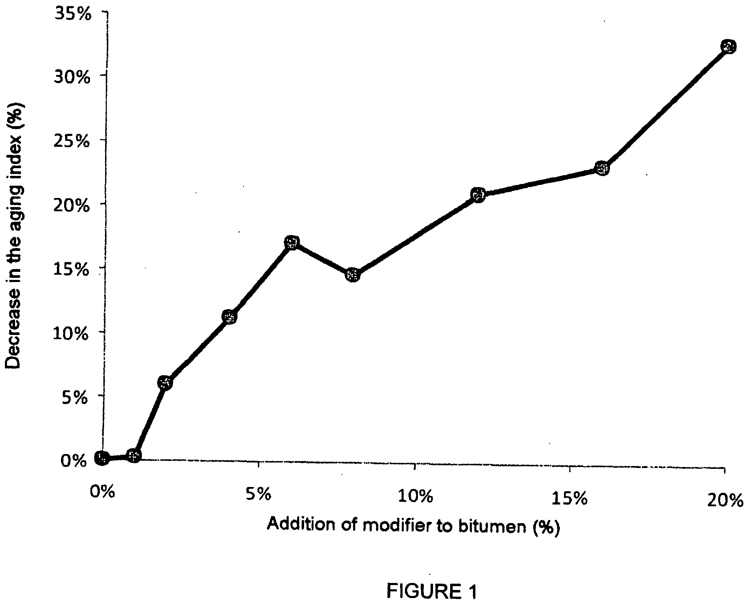

Figure 1 shows the effect of the reduction of the viscosity increase after RTFOT aging for the CS additive.

### Example 6: Assessment of the radical scavenging capacity of the additive of the present invention in an asphaltic road surface using the Rolling-Thin Film Oven Test, RTFOT)

In relation to the chemical effectiveness of the free radical scavenging reaction, infrared spectroscopy assays (FTIR) were performed on asphalt samples prepared according to Example 4, which allows estimating tendencies with respect to the increment of oxidized C=O and eventually S=O compounds present in the bitumen, which can be compared in the different aging states.

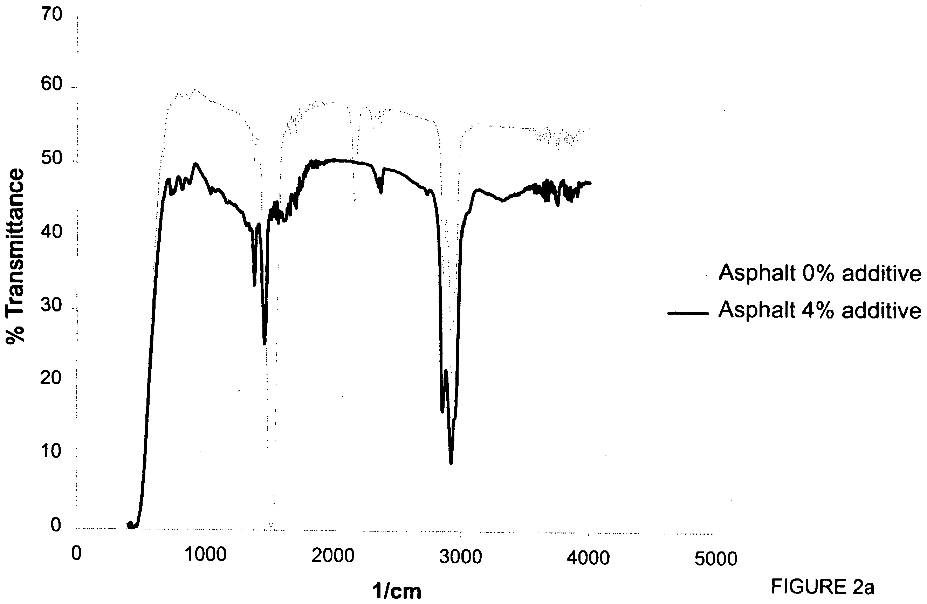

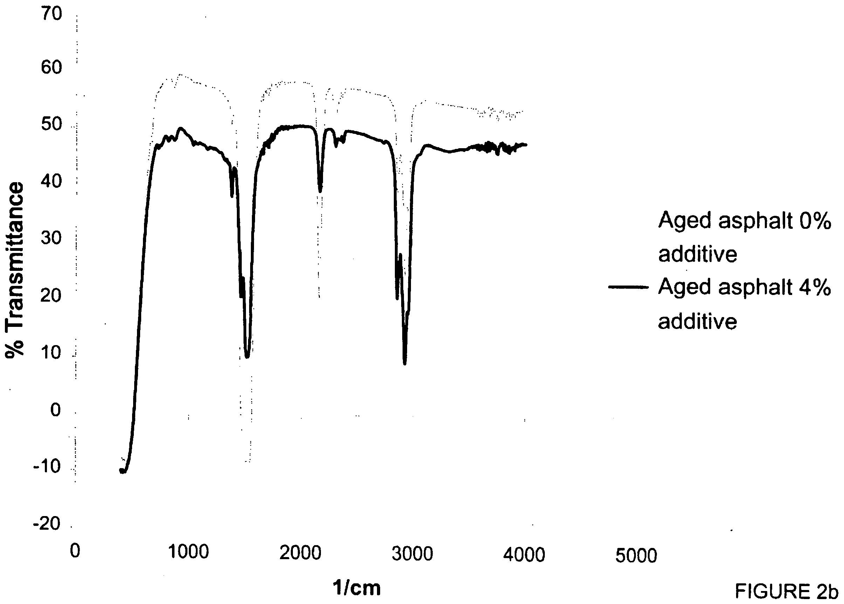

As shown in Figures 2a and 2b, infrared spectra were collected to verify the effect of the additive addition on the reduction of the oxidized compound formation. Figure 2a shows the infrared spectrum for the asphaltic road surface with no additive and with 4% of CS additive with no aging, and Figure 2b shows the infrared spectrum for the asphaltic road surface with no additive and with 4% of CS additive after RTFOT aging.

In both samples an increase is observed in double and triple carbon bonds, versus a decrease in aliphatic compounds, however this increment of oxidized species is lower in the asphaltic mixture treated with CS additive with free radical scavengers.

### Example 7: Influence of the additive on the mechanical properties of bitumen at low temperatures

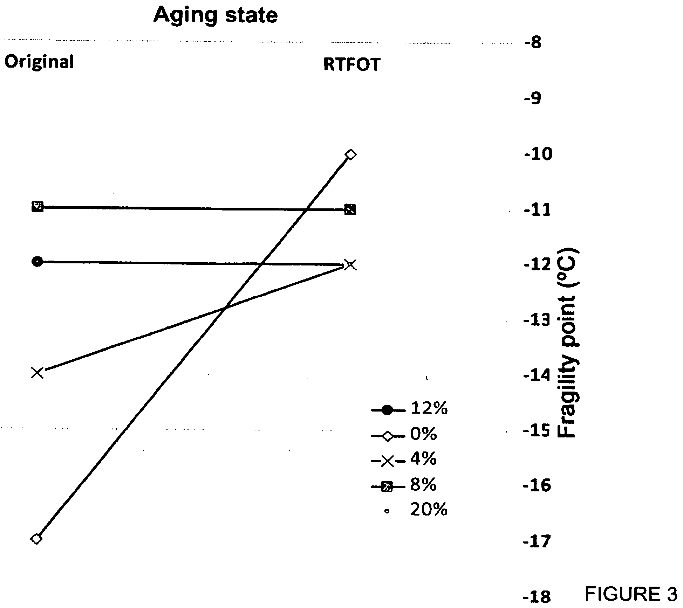

Exploratory experiments were carried out to verify the mechanical behavior of the anti-aging bitumen at low temperatures. The bitumen fragility point was determined by using the Fragility Point Assay (FRAASS), according to the Procedure 8.302.17, described in the Volume No. 8 of the Handbook of Roads of the Chilean Ministry of Public Works (2003), applied to samples in their original state and after RTFOT aging, for the control sample and for bitumen samples modified with 4%, 8%, 12% and 20% of CS additive; these results are shown in Figure 3. This assay indicates the temperature for which bitumen shows evidence of fragile behavior; this is a very low temperature in the original state, but as long as bitumen ages it increases, which turns it fragile in a broader temperature range. Figure 3 shows that although the application of the CS additive worsens, i.e. increases, the fragility temperature in the original state, it is able to keep lower fragility temperatures than in the control sample with no CS additive, which implies that at the starting service point of the asphaltic road surface, the bitumen modified with the additive of the present invention will be less aged due to the asphalt mixture and compaction processes, thus starting its service life with a lower cracking potential.

## Claims

1. Asphalt with anti-aging properties, wherein the bitumen in said asphalt essentially comprises:
a. anti-aging bitumen that comprises from 80 to 98% by weight of bitumen with a penetration index ranging from 20 to 200 mm/10; and from 2 to 20% by weight of an anti-aging additive consisting in dehydrated and ground grape marc with a diameter ranging from 10 µm and 10,000 µm, containing free radical scavengers essentially comprising from 1.5 to 12% by weight of phenols; from 2.5 to 20% by weight of tannins; from 0.5 to 5% by weight of procyanidins; and from 0.0 to 0.8% by weight of anthocyanins; and
b. aggregates.

2. Process to prepare asphalt with anti-aging properties according to claim 1, wherein said process essentially comprises the steps of:
a. introducing dry and hot solid granular aggregates in an industrial-size ceramic grinder for the production of asphalt;
b. adding anti-aging bitumen; and
c. mixing the ingredients in said grinder for the production of asphalt.

3. Process to prepare asphalt with anti-aging properties according to claim 1, wherein said process essentially comprises the steps of:
a. introducing dry and hot solid granular aggregates in an industrial-size ceramic grinder for the production of asphalt;
b. adding into said ceramic grinder bitumen with a penetration index from 20 to 200 mm/10,
c. adding said anti-aging additive with an oily fluidizer into said ceramic grinder; and
d. mixing the contents of said ceramic grinder.

4. Process to prepare asphalt according to claim 3, wherein in said step b) said penetration index ranges preferably from 30 to 200 mm/10.

## Patentansprüche

1. Asphalt mit haltbarkeitsverlängernden Eigenschaften, wobei das Bitumen im genannten Asphalt im Wesentlichen Folgendes umfasst:
a. haltbarkeitsverlängerndes Bitumen umfassend von 80 bis 98 Gew.-% Bitumen mit einem Penetrationsindex der zwischen 20 und 200 mm/10 liegt; und von 2 bis 20 Gew.-% eines haltbarkeitsverlängernden Zusatzstoffes bestehend aus dehydrierten und gemahlenen Traubentrester mit einem Durchmesser der zwischen 10 µm und 10.000 µm liegt, enthaltend freie Radikalfängern im Wesentlichen umfassend von 1,5 bis 12 Gew.-% Phenole; von 2,5 bis 20 Gew.-% Tannine; von 0,5 bis 5 Gew.-% Procyanidine; und von 0,0 bis 0,8 Gew.-% Anthocyanine; und
b. Aggregate.

2. Verfahren zur Herstellung von Asphalt mit haltbarkeitsverlängernden Eigenschaften nach Anspruch 1, wobei das genannte Verfahren im Wesentlichen die folgenden Schritte umfasst:
a. das Einführen von trockenen und heißen festen granulären Aggregaten in einem Keramikmahlwerk von industrieller Größe zur Herstellung von Asphalt;
b. das Hinzufügen von haltbarkeitsverlängerndem Bitumen; und
c. das Mischen der Bestandteile im genannten Mahlwerk zur Herstellung von Asphalt.

3. Verfahren zur Herstellung von Asphalt mit haltbarkeitsverlängernden Eigenschaften nach Anspruch 1, wobei das genannte Verfahren im Wesentlichen die folgenden Schritte umfasst:
a. das Einführen von trockenen und heißen festen granulären Aggregaten in einem Keramikmahlwerk von industrieller Größe zur Herstellung von Asphalt;
b. das Hinzufügen von Bitumen mit einem Penetrationsindex von 20 bis 200 mm/10 in das genannte Keramikmahlwerk,
c. das Hinzufügen vom genannten haltbarkeitsverlängernden Zusatzstoff mit einem öligen Verflüssigungsmittel in das genannte Keramikmahlwerk; und
d. das Mischen des Inhaltes des genannten Keramikmahlwerkes.

4. Verfahren zur Herstellung von Asphalt nach Anspruch 3, wobei im genannten Schritt b) der genannte Penetrationsindex vorzugsweise zwischen 30 und 200 mm/10 liegt.

## Revendications

1. Asphalte ayant des propriétés antivieillissement, dans lequel le bitume dans le dit asphalte comprend essentiellement :
a. du bitume antivieillissement comprenant entre 80% et 98% en poids de bitume avec un taux de pénétration allant de 20 à 200 mm/10 ; et de 2 à 20% en poids d'un additif antivieillissement consistant en un marc de raisin déshydraté et trituré avec un diamètre allant de 10 µm à 10.000 µm, contenant des piégeurs de radicaux libres comprenant essentiellement de 1,5% à 12% en poids de phénols ; de 2,5% à 20% en poids de tannins ; de 0,5% à 5% en poids de procyanidines ; et de 0,0 % à 0,8% en poids d'anthocyanines ; et
b. des agrégats

2. Procédé de préparation d'asphalte ayant des propriétés antivieillissement selon la revendication 1, dans lequel ledit procédé comprend essentiellement les étapes de :
a. introduction d'agrégats solides granulaires secs et chauds dans un broyeur en céramique de dimension industrielle pour la production d'asphalte ;
b. addition de bitume antivieillissement ; et
c. mélange des ingrédients dans ledit broyeur pour la production d'asphalte.

3. Procédé de préparation d'asphalte ayant des propriétés antivieillissement selon la revendication 1, dans lequel ledit procédé comprend essentiellement les étapes de :
a. introduction d'agrégats solides granulaires secs et chauds dans un broyeur en céramique de dimension industrielle pour la production d'asphalte ;
b. addition dans ledit broyeur en céramique du bitume avec un taux de pénétration allant de 20 à 200 mm/10,
c. addition dudit additif antivieillissement avec un agent fluidisant huileux dans ledit broyeur en céramique ; et
d. mélange du contenu dudit broyeur en céramique.

4. Procédé de préparation selon la revendication 3, dans lequel dans ladite étape b) ledit taux de pénétration allant de préférence de 30 à 200 mm/10.
